# EUROPÄISCHE PATENTSCHRIFT

(11) **EP 2 325 421 B1**
(45) Veröffentlichungstag und Bekanntmachung des Hinweises auf die Patenterteilung: **04.01.2017**
(21) Anmeldenummer: 09013367.9
(22) Anmeldetag: 22.10.2009
(51) Int. Cl.: E05B 19/00, A61B 5/11, B60R 25/00, B60K 28/06, G01C 21/34

(54) **Kfz-Zündschlüssel, Kfz-Navigationsvorrichtung, Kfz-System und Verfahren**
Motor vehicle ignition key, motor vehicle navigation device, motor vehicle system and method
Clé de contact de véhicule automobile, dispositif de navigation de véhicule automobile, système de véhicule automobile et procédé

(43) Veröffentlichungstag der Anmeldung: 25.05.2011
(73) Patentinhaber: Fraunhofer-Gesellschaft zur Förderung der angewandten Forschung e.V., 80686 München (DE)
(72) Erfinder: Podolak, Christian, 79111 Freiburg im Breisgau (DE); Mörsdorf, Hans Joachim, 90763 Fürth (DE); Arzt, Christian, 91058 Erlangen (DE); Rulsch, Martin, 91054 Erlangen (DE); Ershov, Sergey, 91054 Erlangen (DE); Couronné, Robert, 91058 Erlangen (DE)
(74) Vertreter: Schenk, Markus

(56) Entgegenhaltungen:
- EP-A1- 1 583 040
- EP-A2- 1 304 250
- WO-A1-2008/057024
- WO-A1-2009/031899
- WO-A1-2010/064178
- WO-A1-2010/064178
- WO-A2-01/82789
- WO-A2-2009/006980
- CA-A1- 2 539 115
- DE-A1-102007 001 734
- JP-A- 10 148 539
- JP-A- 2007 292 505
- US-B1- 7 373 820

## Beschreibung

Die vorliegende Erfindung bezieht sich auf einen Kfz-Zündschlüssel, eine Kfz-Navigationsvorrichtung, ein Kfz-System und Verfahren welche in Verbindung mit einem Kfz benutzt werden können.

In der heutigen Welt ist Mobilität ein wichtiger Faktor. Die meisten Menschen verfügen daher über ein eigenes Kfz. Jedes Kfz hat typischerweise einen oder mehrere dem Kfz zugeordnete Kfz-Zündschlüssel. Hierbei existieren verschiedene Ausführungsformen von Kfz-Zündschlüsseln. Während früher Kfz-Zündschlüssel lediglich aus einem Schlüsselbart mit einem Schlüsselkörper bestanden, so verfügen sie heute zum Teil über komplexe Elektronikschaltkreise. Die Wegfahrsperre beim modernen Kfz war hierbei ein erster Schritt zur Integration von Elektronik in einen Kfz-Zündschlüssel. Hierbei wird lediglich ein kleiner RFID-Transponder dem Schlüssel hinzugefügt, welcher beim Starten des Kfz, in Verbindung mit einem RFID-Lesegerät im Kfz eine Authentifizierung zum Starten des Kfz durchführt. Zusätzlich zur Wegfahrsperre verfügen die meisten heutigen Kfz-Zündschlüssel über eine Fernbedienungsfunktion zum Öffnen der Türen des Kfz, wobei die Fernbedienung ihre Daten zum Kfz früher über Infrarot übertragen hat, dies aber heute nahezu vollständig durch eine UHF-Funkübertragung ersetzt worden ist. Ein Kfz-Zündschlüssel mit einem eingebauten RFID-Transponder erhält eine eigene Seriennummer. Dies ermöglicht dem Kfz eine Identifizierung des Kfz-Benutzers und eine Einstellung des Kfz auf den Kfz-Benutzer. So können beispielsweise Sitzposition und Spiegeleinstellungen dem jeweiligen Kfz-Benutzer angepasst werden. Weiterhin können auf den Kfz-Zündschlüsseln fahrzeugspezifische Daten, beispielsweise die Seriennummer des Fahrzeugs, aber auch wartungsrelevante Daten, beispielsweise der Kilometerstand oder Fehlercodes, gespeichert werden. Diese Daten können von einer Fachwerkstatt ausgelesen und als Basis für eine Schnelldiagnose verwendet werden.

Eine weitere technische Neuerung im automobilen Bereich bilden Kfz-Navigationsgeräte. Kfz-Navigationsgeräte ersetzen mehr und mehr das umständliche Kartenlesen. Während früher Reiserouten mit Hilfe von Karten im vornhinein geplant werden mussten, so genügt heute die Eingabe eines Zielortes in ein Navigationsgerät. Navigationsgeräte sind in der Lage, unter Berücksichtigung verschiedenster Bedingungen eine optimale Route von einem Startpunkt zu einem gewählten Ziel zu finden. Hierbei kann das Navigationsgerät abhängig von den Wünschen des Benutzers die Route anpassen. Beispielsweise hat der Benutzer die Wahl zwischen der kürzesten und der schnellsten Route. Heutige Navigationsgeräte verfügen zudem über umfangreiche Datenbanken, in welchen die Adressen von wichtigen Orten gespeichert sind. Dies können beispielsweise Parkhäuser, Bahnhöfe, Flughäfen, aber auch Restaurants oder Sehenswürdigkeiten sein. Navigationsgeräte existieren in verschiedensten Ausführungsformen und Funktionsumfängen. Derzeit existieren Navigationsgeräte, welche fest in ein Kfz eingebaut sind, und Navigationsgeräte, welche portabel sind und sich in jedem Kfz nachrüsten lassen.

Heute ist das Auto für die meisten das Fortbewegungsmittel der Wahl - dabei spielt es keine Rolle, ob es sich um die lange Reise in den Urlaub oder die Fahrt zum Bäcker an der Ecke handelt. Der moderne Mensch bewegt sich nicht mehr oder zumindest nicht mehr als absolut nötig. Dieses Verhalten zieht zahlreiche "Wohlstandskrankheiten" nach sich: Fettleibigkeit, Hypertonie, Diabetes und (als Folge) Herz-Kreislauf-Krankheiten, welche durch Bewegungsmangel stark begünstigt werden. Wenngleich der moderne Mensch sich nach einem gesunden und durchtrainierten Körper sehnt, scheitert eine Umsetzung der guten Vorsätze meistens an der zu überwindenden Trägheits - bzw. Bequemlichkeitsschwelle "innerer Schweinehund"). Aufgrund des demographischen Wandels ist eine lebenslange Prävention unerlässlich, um auch im fortgeschrittenen Alter eine hohe Lebensqualität zu erhalten. Eine regelmäßigere Bewegung wäre für viele Menschen daher nötig. Im Leistungssport werden schon seit längerem Systeme zur Überwachung der körperlichen Fitness eines Sportlers eingesetzt. Hierbei existieren z.B. Pulssensoren, aber auch Bewegungssensoren, welche die Bewegung des Sportlers aufzeichnen. Diese Systeme sind heutzutage auch für Hobbysportler verfügbar. Beispielsweise existieren Systeme zur Pulsmessung, welche aus einem Brustgurt und einer Uhr bestehen. Jedoch geben diese Systeme keinen Aufschluss über die zurückgelegte Wegstrecke. Ein einfaches System zur Protokollierung der zurückgelegten Wegstrecke sind mechanische Schrittzähler. Diese haben unter anderem den Nachteil, dass sie ungenau arbeiten und die Variation der Schrittlänge nicht berücksichtigen. Eine andere Möglichkeit zur Protokollierung von Bewegungsdaten sind Bewegungssensoren, welche mit Hilfe eines 3D-Beschleunigungssensors die Bewegungen eines Benutzers aufzeichnen. Diese Sensoren können eng am Körper befestigt werden und beim Sport sämtliche Bewegungen erfassen. Ein Nachteil all dieser Geräte ist, dass sie sich an passionierte Hobby- bzw. Profisportler richten. Vor Beginn einer sportlichen Tätigkeit müssen diese Geräte erst am Sportler angelegt bzw. aktiviert werden. Alltägliche Bewegungen, wie beispielsweise der Fußweg zum Auto oder das Treppensteigen daheim oder im Büro, werden von diesem System typischerweise nicht erfasst, da sich ein Benutzer im alltäglichen Leben nicht mit zusätzlichen Geräten belasten will. Ein weiterer Nachteil ist, dass vor allem nicht sportbegeisterte Menschen kaum Interesse an derlei Zusatzprodukten haben, und sie daher keinen Aufschluss über ihre alltäglichen Bewegungen besitzen. Allerdings sind für diese Menschen oft die alltäglichen Bewegungen die einzigen sportlichen Aktivitäten, welche sie vollführen.

Die US 7373820 zeigt ein Grundprinzip und allgemeine Anwendung zur Erfassung der menschlichen Bewegungsaktivität.

Die US 6160478 und US 6658292 zeigen Beispiele von Aktivitätsüberwachungsgeräten für die medizinische Anwendung bzw. für die Patientenversorgung als tragbare und implantierbare Sensoren.

Die US 7512515 zeigt Beispiele zur Erfassung der menschlichen Bewegungsaktivitäten in Freizeitanwendung bzw. Lifestyle-Szenarien.

Die WO 2009/031899 A1 zeigt ein Verfahren zum Identifizieren mobiler Geräte, welche fähig sind, miteinander zu kommunizieren. Das Verfahren weist für jedes der mobilen Geräte ein Erfassen von Bewegungsinformationen der mobilen Geräte innerhalb einer vorgegebenen Zeitperiode und ein Kommunizieren der Bewegungsinformationen auf. Weiterhin werden Bewegungsinformationen eines mobilen Gerätes mit Bewegungsinformationen eines anderen mobilen Gerätes verglichen und es werden die mobilen Geräte identifiziert, welche übereinstimmende Bewegungsinformationen aufweisen.

Die JP 10148539 A zeigt ein tragbares Navigationssystem, welches über einen Schrittzähler die Anzahl der Schritte zählt, wenn ein Benutzer das tragbare Navigationssystem mit sich herumträgt.

Die DE 10 2007 001734 A1 beschreibt ein Fahrerinformationssystem mit einem in einem Fahrzeug angeordneten Navigationssystem und einer tragbaren Einheit, welche zur drahtlosen Komunikation mit dem Navigationssystem ausgebildet ist, wobei das Navigationssystem bei aktivierter dynamischer Routenführung für eine vorgebbare Zeitdauer zur dynamischen Routenplanung nach dem Abstellen des Motors des Fahrzeugs ausgebildet ist und bei erforderlicher Veränderung der vor dem Abstellen ausgewählten Route während dieser vorgebbaren Zeitdauer eine Nachricht an die tragbare Einheit übermittelt wird.

Eine Aufgabe der vorliegenden Erfindung ist es, eine Vorrichtung zu schaffen, welche ermöglicht, für eine breitere Bevölkerungsgruppe eine Aufzeichnung der alltäglichen Bewegungen zu erzielen und damit die Möglichkeit, auf eine übertriebene Bewegungslosigkeit zu reagieren bzw. die Hemmschwelle bzw. den Zusatzaufwand zu reduzieren, der viele Menschen davon abhält, eine Überwachung der alltäglichen Aktivität zu erfassen, um darauf reagieren zu können.

Diese Aufgabe wird durch die Gegenstände der unabhängigen Ansprüche gelöst.

Der Kerngedanke der vorliegenden Erfindung liegt darin, dass die alltäglichen Bewegungen eines Benutzers besser aufgezeichnet werden können und auf eine übertriebene Bewegungslosigkeit besser reagiert bzw. die Hemmschwelle bzw. der Zusatzaufwand der viele Menschen davon abhält, eine Überwachung der alltäglichen Aktivität zu erfassen, reduziert werden kann, wenn in einem Kfz-Schlüssel ein Bewegungssensor integriert ist, wobei der Bewegungssensor ausgelegt ist, um eine Bewegung des Kfz-Schlüssels zu erfassen und daraus Bewegungsdaten zu gewinnen, welche in einem Speicher des Kfz-Schlüssels aufgezeichnet werden und über eine Schnittstelle an ein externes Gerät ausgegeben werden können. Ausgehend davon, dass ein Benutzer den Kfz-Schlüssel bei seinen alltäglichen Bewegungen mit sich herumträgt, wird eine unaufwändige Protokollierung der alltäglichen Bewegungen des Benutzers für breite Bevölkerungsgruppen ermöglicht.

Bewegungen des Benutzers aufgezeichnet werden können, ohne dass der Benutzer ein zusätzliches Gerät mit sich herum tragen muss. Ein weiterer Vorteil ist, dass der Benutzer den Kfz-Schlüssel zur Protokollierung seiner Bewegungsdaten nicht erst am Körper anlegen muss, wie beispielsweise bei Pulssensoren, sondern ihn lose beispielsweise in einer Hosentasche am Körper tragen kann.

Ein weiterer Aspekt der vorliegenden Erfindung basiert auf der Erkenntnis dass ein Benutzer besser zu sportlichen Aktivitäten animiert werden kann, wenn eine Kfz-Navigationsvorrichtung eine Schnittstelle zum Empfang von Bewegungsdaten eines Kfz-Benutzers, die durch einen am Körper getragenen Sensor erfasst sind, aufweist und die weiterhin eine Einrichtung zum Berechnen einer Fahrtroute unter Berücksichtigung der Bewegungsdaten umfasst. Die Berücksichtigung der Bewegungsdaten bei der Berechnung der Fahrtroute ermöglicht eine bessere, insbesondere unaufwändige und für den Kfz-Benutzer gegebenenfalls unmerkliche Unterstützung zur Integration von sportlichen Aktivitäten in den Alltag und eine bessere Motivation zu sportlichen Aktivitäten.

Ein weiterer Vorteil der vorliegenden Erfindung ist somit, dass durch die Berechnung einer Fahrtroute unter Berücksichtigung der Bewegungsdaten des Kfz-Benutzers, der Kfz-Benutzer zu sportlichen Aktivitäten motiviert wird, welche sich in den Alltag des Benutzers integrieren lassen.

Ein weiterer Aspekt der vorliegenden Erfindung basiert auf der Erkenntnis, dass die alltäglichen Bewegungen eines Benutzers besser aufgezeichnet werden können und der Benutzer besser zu sportlicher Aktivität motiviert wenn kann, wenn ein Kfz-System einen Kfz-Zündschlüssel und eine Kfz-Steuereinrichtung umfasst, wobei der Kfz-Zündschlüssel einen Bewegungssensor zur Erfassung einer Bewegung des Kfz-Zündschlüssels und zur Gewinnung von Bewegungsdaten aus der erfassten Bewegung, sowie einen Speicher zum Aufzeichnen der gewonnen Bewegungsdaten und eine erste Schnittstelle zum Ausgeben der Bewegungsdaten an die Kfz-Steuereinrichtung umfasst, und wobei die Kfz-Steuervorrichtung dem Kfz-Schlüssel zugeordnet ist und eine zweite Schnittstelle zum Empfang der Bewegungsdaten und zum Durchführen von Kfz-Steuerungsaufgaben umfasst. Ausgehend davon, dass ein Benutzer den Kfz-Zündschlüssel bei seinen alltäglichen Bewegungen mit sich herumträgt, wird so eine bessere Protokollierung der alltäglichen Bewegungen des Benutzers ermöglicht, weiterhin wird, da die Kfz-Steuereinrichtung Steueraufgaben durchführen kann eine bessere Integration von sportlichen Aktivitäten in die alltäglichen Bewegungen des Benutzers ermöglicht.

Ein weiterer Vorteil der vorliegenden Erfindung ist somit, dass wenn die Bewegungen eines Kfz-Benutzers aufgezeichnet werden und von einer Kfz-Steuereinrichtung genutzt werden um Steueraufgaben durchzuführen, die Kfz-Steuereinrichtung den Kfz-Benutzer bei der Integration von sportlichen Aktivitäten in seine alltäglichen Bewegungen unterstützen kann und dem Kfz-Benutzer eine Rückmeldung über seine sportlichen Aktivitäten geben kann.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Darstellung eines Kfz-Zündschlüssels gemäß einem ersten Ausführungsbeispiel der vorliegenden Erfindung;
- Fig. 2: eine schematische Darstellung einer Kfz-Navigationsvorrichtung gemäß einem zweiten Ausführungsbeispiel der vorliegenden Erfindung;
- Fig. 3: eine schematische Darstellung eines Kfz-Systems gemäß einem dritten Ausführungsbeispiel der vorliegenden Erfindung; und
- Fig. 4: eine schematische Darstellung eines Kfz-Systems gemäß einem vierten Ausführungsbeispiel der vorliegenden Erfindung;

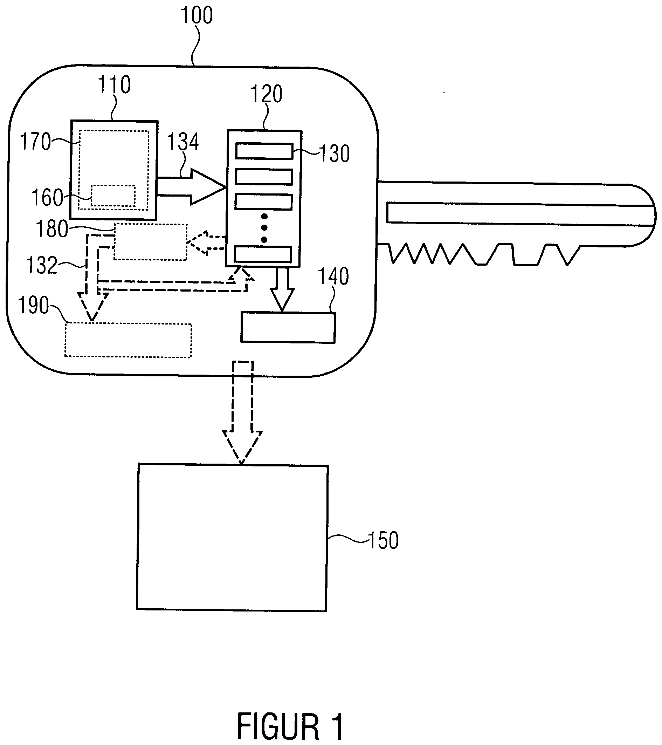

Fig. 1 zeigt eine schematische Darstellung eines Kfz-Zündschlüssels 100 gemäß einem ersten Ausführungsbeispiel der vorliegenden Erfindung. Der Kfz-Zündschlüssel 100 umfasst einen Bewegungssensor 110, einen Speicher 120 und eine Schnittstelle 140. Weiterhin zeigt Fig. 1 ein externes Gerät 150. Der Bewegungssensor 110 ist mit dem Speicher 120 verbunden und der Speicher 120 ist mit der Schnittstelle 140 verbunden. Im Speicher 120 können sich Bewegungsdaten 130 befinden. Bei dem Bewegungssensor 110 kann es sich beispielsweise um ein miniaturisiertes Messsystem handeln, dass als ein 3D-Beschleunigungssensor 170 mit einem Drucksensor 160 ausgeführt ist. Wobei der Druckmesser 160 in dem 3D-Beschleunigungssensor 170 integriert sein kann oder als zusätzliches Bauteil ausgeführt ist.

Der Bewegungssensor 110 erfasst kontinuierlich die Bewegungen des Kfz-Zündschlüssels 100, wobei der 3D-Beschleunigungssensor 170 Bewegungen des Kfz-Zündschlüssels in alle 3 Richtungen des Raumes erfasst und der Drucksensor 160 über die barometrische Höhenformel eine Schätzung der jeweils aktuellen Höhe liefert. Aus den erfassten Bewegungen gewinnt der Bewegungssensor die Bewegungsdaten 130 welche im Speicher 120 des Kfz-Zündschlüssels 100 abgelegt werden. Die gespeicherten Bewegungsdaten 130, beispielsweise Beschleunigungsdaten und Daten über Höhenunterschiede können über die Schnittstelle 140 an das externe Gerät 150 übertragen werden. Die erfassten 3D-Beschleunigungsdaten und Daten über Höhenunterschiede also Rohdaten 134 können beispielsweise im externen Gerät 150 mittels Algorithmen ausgewertet werden, um einerseits die Art der Bewegung (sitzen, stehen, liegen, gehen, joggen, rennen, Rad fahren und Treppensteigen) und andererseits die Intensität und Dauer der Bewegung sowie den zurückgelegten Höhenunterschied zu ermitteln.

Die Aufzeichnung der Bewegungsdaten 130 bzw. Vitalparameter setzt voraus, dass der Kfz-Zündschlüssel 100 sich möglichst nah am Körper und nicht in einer Tragetasche oder einem locker getragenen Kleidungsstück befindet, sonst werden die Messdaten verfälscht. Es ist denkbar, dass in einem weiteren Ausführungsbeispiel der Kfz-Zündschlüssel 100 eine Auswerteeinrichtung 180 umfasst, welche ausgebildet ist, um aus den von dem Bewegungssensor 110 gelieferten Rohdaten 134 klassifizierte Aktivitätsinformationen 132 als Bewegungsdaten 130 zu erhalten.. Der Kfz-Zündschlüssel 100 kann daher als intelligentes System betrachtet werden, welches die gesammelten Daten bzw. Bewegungsdaten 130, beispielsweise als 3D-Beschleunigung und Höhenänderung als Rohdaten 134 des Beschleunigungssensors 110 verarbeitet und verschiedene Bewegungsklassen, beispielsweise Ruhen, also Sitzen, Liegen, Stehen und Ähnliche, Gehen, Laufen, Treppe Hoch und Runter steigen, Radfahren usw. erkennt. Das System bzw. der Zündschlüssel 100 kann weiterhin in der Lage sein die Intensität der jeweiligen Bewegung festzustellen.

Die Berechnung der Höhenänderung aus den Barometerdaten und damit der Drucksensor 160 des Bewegungssensors 110 ist nicht zwingend notwendig, kann aber zu Verbesserung, des in der Auswerteeinrichtung 180, durchgeführten Verfahrens zur Erhaltung der klassifizierten Aktivitätsinformationen 134 genutzt werden.

Die Bewegungsdaten 130 können, als von dem Bewegungssensor 110 gelieferte Rohdaten 134, beispielsweise als 3D-Beschleunigungs- und Höhendaten oder auch als klassifizierte Aktivitätsinformationen 132 vorliegen.

Mit anderen Worten gesagt, werden die vom Bewegungssensor 110 gelieferten Rohdaten 134 von der Auswerteeinrichtung 180 als Aktivitätsinformationen 132 klassifiziert, wobei die Aktivitätsinformationen 132 die Aktivitätsklassen und Intensitäten der Bewegungen des Benutzers beschreiben. Das Vorhandensein einer Auswerteeinheit 180 im Kfz-Zündschlüssel 100 ermöglicht damit die Klassifizierung der Bewegungen bzw. der aufgenommen Rohdaten 134 als Bewegungsdaten 130 eines Benutzers des Kfz-Zündschlüssels 100 und eine Information des Benutzers über seine Aktivitätsdaten, basierend auf den klassifizierten Aktivitätsinformationen 132. Zur Anzeige von Rückmeldungen, beispielsweise des Aktivitätslevels an den Anwender bzw. Benutzer oder Träger des Autoschlüssels bzw. Kfz-Zündschlüssels 100, kann der Kfz-Zündschlüssels 100 weiterhin mit einer Anzeige 190, beispielsweise einer LED-Skala oder ähnlichem versehen sein. Die über einen bestimmten Zeitraum berechnete Aktivität des Anwenders kann dann beispielsweise, direkt auf dem Kfz-Zündschlüssel 100 mittels einer adäquaten Anzeige 190, beispielsweise LED-Skala, TFT-Display, OLED-Display und ähnlichen dargestellt werden. Der Kfz-Zündschlüssels 100 dient daher als portables "Feedback System" zur Überwachung, Aufzeichnung und Rückmeldung der Aktivitätsdaten eines Benutzers.

Dies ermöglicht weiterhin, beispielsweise, dass bei bestimmten Bewegungsrnustern verschiedene Funktionen des Kfz-Zündschlüssels 100 deaktiviert werden. So, kann beispielsweise die Zündschlüsselfunktion zum Starten eines Kfz deaktiviert werden, wenn die Auswerteeinrichtung 180 des Kfz-Zündschlüssels 100 ein Bewegungsmuster erkennt, welches einer Bewegung einer angetrunkenen Person ähnelt. Weiterhin kann der Kfz-Zündschlüssel 100 sämtliche Funktionen wie beispielsweise Wegfahrsperre und Fernbedienung eines möglichen bekannten Kfz-Zündschlüssels umfassen.

Das externe Gerät 150 kann beispielsweise ein Zündschloss eines Kfz oder ein PC zur Auswertung der Bewegungsdaten 130 außerhalb des Kfz sein.

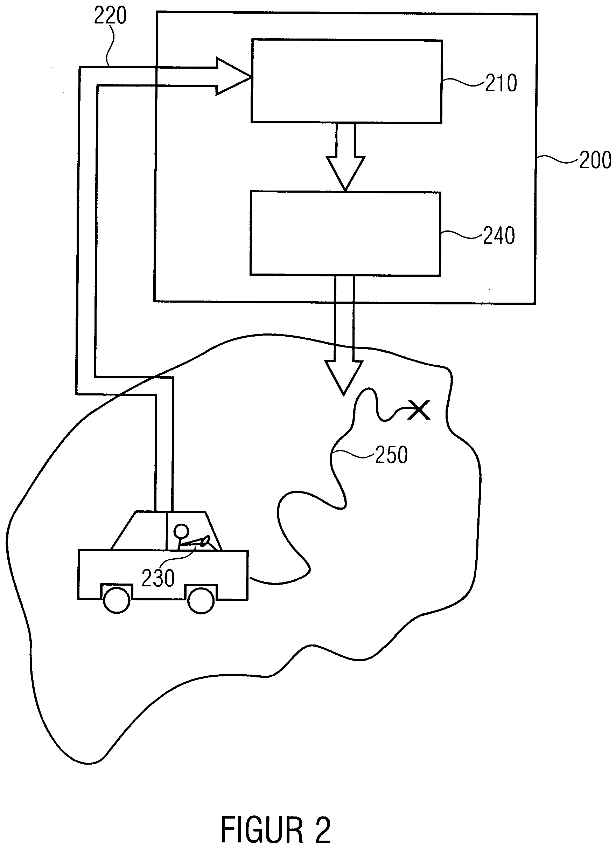

Fig. 2 zeigt eine schematische Darstellung einer Kfz-Navigationsvorrichtung 200 gemäß einem zweiten Ausführungsbeispiel der vorliegenden Erfindung. Die Kfz-Navigationsvorrichtung 200 umfasst eine Schnittstelle 210 zum Empfangen von Bewegungsdaten 220. Weiterhin umfasst die Kfz-Navigationsvorrichtung 200 eine Einrichtung 240 zur Berechnung einer Fahrtroute 250. Weiterhin ist in Fig. 2 ein Kfz-Benutzer 230 zu sehen.

Ein Kfz-Benutzer 230 verfügt über einen Sensor, welcher sämtliche Bewegungen des Kfz-Benutzers 230 erfasst und speichert. Der Sensor kann beispielsweise ein 3D-Beschleunigungsensor sein, welcher in einem Alltagsgegenstand des Kfz-Benutzers integriert ist. Diese Bewegungsdaten 220 werden an die Schnittstelle 210 der Kfz-Navigationsvorrichtung 200 übertragen. Die Einrichtung 240 der Kfz-Navigationsvorrichtung 200 kann dann eine Fahrtroute 250 unter Berücksichtigung der Bewegungsdaten 220 berechnen. Wobei die berechnete Fahrtroute 250 dazu dient den Kfz-Benutzer bei der Integration sportlicher Aktivitäten in seinen Alltag zu unterstützen. Aus den gewonnenen Bewegungsdaten 220 wird beispielsweise ein Bewegungsprofil erstellt, was dem Kfz-Benutzer 230 eine detaillierte Rückmeldung über seinen Bewegungszustand gibt.

Basierend auf dem berechneten Bewegungsprofil berechnet die Kfz-Navigationsvorrichtung 200 beispielsweise Vorschläge für das Abstellen des Fahrzeugs in einem größeren Umkreis um das Ziel. Bei deren Berechnung fließen Informationen über die lokalen Gegebenheiten ein, so dass z.B. bevorzugt Parkanlagen, Fußgängerzonen usw. für die letzten Meter vorgeschlagen werden.

Weiterhin kann die Kfz-Navigationsvorrichtung beispielsweise über eine Datenbank mit Adressen wichtiger Orte verfügen. So kann die Kfz-Navigationsvorrichtung 200, abhängig von den Bewegungsdaten 220 bzw. dem Bewegungsprofil, dem Kfz-Benutzer 230 Sportangebote in der Umgebung vorschlagen.

Weiterhin kann die Kfz-Navigationsvorrichtung 200 dem Kfz-Benutzer 230, abhängig von den Bewegungsdaten 220 bzw. dem Bewegungsprofil, einen Fußweg als Alternative für eine Fahrtroute 250 vorschlagen.

Weiterhin kann das berechnete Bewegungsprofil vom Kfz-Benutzer 230 beispielsweise über eine interaktive Applikation, die in die Kfz-Navigationsvorrichtung 200 oder ein vergleichbares Multimediasystem des Autos eingebaut ist, abgerufen werden, um den Kfz-Benutzer 230 zu motivieren aktiver zu werden und sich sukzessive einen gesunden Lebenswandel anzueignen.

Zudem kann die Kfz-Navigationsvorrichtung 200 beispielsweise ein Benutzerprofil mit aktuellen (zur Zeit erreichten) Aktivitätswerten erfassen und erlaubt dem Kfz-Benutzer 230 in Form von Sollwerten (Ziele) seine körperliche Aktivität einzustellen.

Die Übertragung der Daten zwischen dem am Körper getragenen Sensor und der Kfz-Navigationsvorrichtung 200 kann beispielsweise kabellos erfolgen. Der am Körper getragene Sensor kann hierbei als ein Kfz-Zündschlüssel 100 gemäß dem ersten Ausführungsbeispiel der vorliegenden Erfindung, aber auch als ein beliebig anderer Sensor zum Aufzeichnen von Bewegungsdaten 220 ausgeführt sein, welcher ausgelegt ist um an die Schnittstelle 210 der Kfz-Navigationsvorrichtung 200 die Bewegungsdaten 220 zu übertragen.

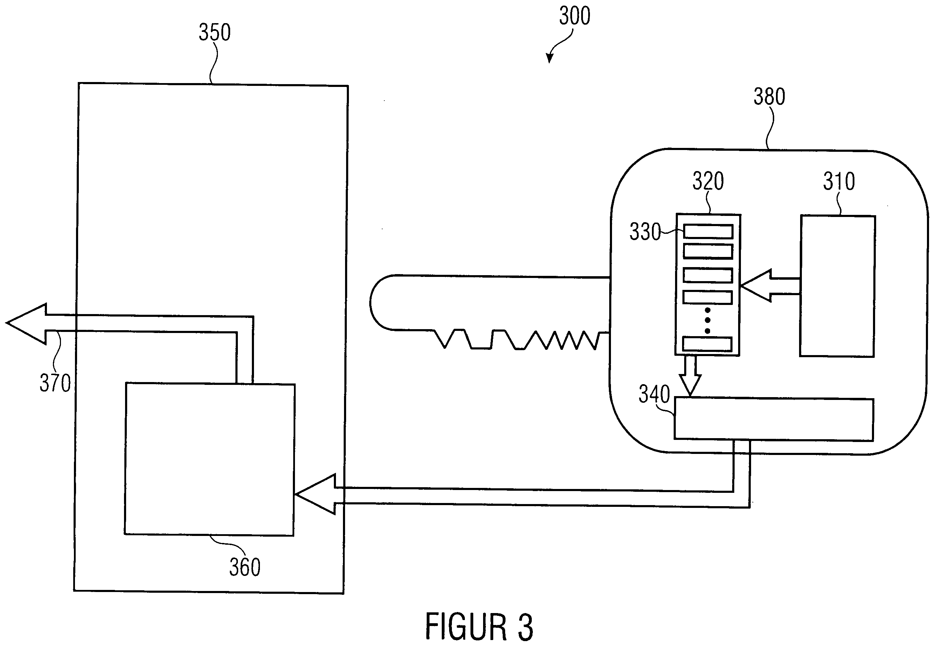

Fig. 3 zeigt eine schematische Darstellung eines Kfz-Systems 300 gemäß einem dritten Ausführungsbeispiel der vorliegenden Erfindung. Das Kfz-System 300 umfasst einen Kfz-Zündschlüssel 380 und eine Kfz-Steuereinrichtung 350. Der Kfz-Zündschlüssel 380 umfasst einen Bewegungssensor 310 sowie einen Speicher 320 und eine Schnittstelle 340 zum Übertragen von Bewegungsdaten 330. Die Kfz-Steuereinrichtung 350 umfasst eine zweite Schnittstelle 360 zum Empfangen von Bewegungsdaten 330 und zum Durchführen von Kfz-Steuerungsaufgaben 370.

Der Bewegungssensor 310 des Kfz-Zündschlüssels 380 erfasst die Bewegungen des Kfz-Zündschlüssels 380, wobei aus den erfassten Bewegungen Bewegungsdaten 330 gewonnen werden, welche im Speicher 320 abgespeichert sind. Die Bewegungsdaten 330 repräsentieren damit beispielsweise auch die Bewegungen eines Kfz-Benutzers des Kfz-Zündschlüssels 380. Die Bewegungsdaten 330 können über die erste Schnittstelle 340 des Kfz-Zündschlüssels 380 an die zweite Schnittstelle 360 der Kfz-Steuereinrichtung 350 übertragen werden. Die zweite Schnittstelle 360 der Kfz-Steuereinrichtung 350 kann dann abhängig von den Bewegungsdaten 330 Kfz-Steuerungsaufgaben 370 durchführen. Die Kfz-Steuereinrichtung 350 ist dabei dem Kfz-Zündschlüssel 380 zugeordnet.

Der Kfz-Zündschlüssel 380 kann beispielsweise ein Kfz-Zündschlüssel 100 wie er im ersten Ausführungsbeispiel der vorliegenden Erfindung beschrieben wird, sein. Der Bewegungssensor 310 des Kfz-Zündschlüssels 380 kann beispielsweise als ein 3D-Beschleunigungssensor ausgeführt sein oder auch als ein 3D-Beschleunigungssensor mit einem Höhendrucksensor ausgeführt sein.

Die Kfz-Steuereinrichtung 350 kann beispielsweise eine Kfz-Navigationsvorrichtung 200 wie sie im zweiten Ausführungsbeispiel der vorliegenden Erfindung beschrieben wird, sein. Weiterhin kann die Kfz-Steuervorrichtung 350 beispielsweise direkt mit einem Kfz-Steuersystem eines Kfz verbunden sein und eine Aufnahme für den Kfz-Schlüssel 380, beispielsweise ein Zündschloss umfassen. Die Kfz-Steuereinrichtung kann dann beispielsweise abhängig von den empfangenen Bewegungsdaten 330 eine Stärke der Lenkhilfe des Kfz varüeren und/oder eine Startfunktion des Kfz deaktivieren, wobei beispielsweise der Widerstand der Lenkung des Kfz schwerer eingestellt werden kann, falls der Kfz-Benutzer einen Bewegungsmangel aufweist. Die Startfunktion des Kfz kann beispielsweise deaktiviert werden, wenn die Bewegungsdaten 330 des Kfz-Benutzers auf einen Alkoholkonsum des Kfz-Benutzers hinweisen.

Weiterhin kann das Kfz-System 300 eine Ladevorrichtung und der Kfz-Zündschlüssel 380 einen wiederaufladbaren Energiespeicher umfassen, wobei die Ladevorrichtung ausgelegt ist, um den wiederaufladbaren Energiespeicher des Kfz-Zündschlüssels 380 zu laden und die Ladevorrichtung beispielsweise einen ersten RFID-Funkschaltkreis umfasst und der Kfz-Zündschlüssel 380 einen zweiten RFID-Funkschaltkreis umfasst, um den Energiespeicher des Kfz-Zündschlüssels 380 kabellos zu laden. Wobei die beiden RFID-Funkschaltkreise auch zur Übertragung der Bewegungsdaten zwischen dem Kfz-Zündschlüssel 380 und der Kfz-Steuervorrichtung 350 genutzt werden können. Weiterhin können die Ladevorrichtung, sowie der Kfz-Zündschlüssel 380 Kontakte umfassen, welche es ermöglichen, dass der Energiespeicher des Kfz-Zündschlüssels über die Kontakte geladen werden kann.
Weiterhin ist denkbar, dass ein Kfz-System 300 beispielsweise eine Mehrzahl von Kfz-Zündschlüsseln 380 umfasst, wobei jedem der Kfz-Zündschlüssel 380 eindeutig ein Index zugeordnet ist. Die Kfz-Steuereinrichtung 350 kann dann beispielsweise Steuerungsaufgaben 370 unter Berücksichtigung der Bewegungsdaten 330 und dem Index des Kfz-Zündschlüssels 380 durchführen. Ein Kfz, welches beispielsweise von einem Ehepaar geteilt wird, wobei jeder der Ehepartner seinen eigenen Kfz-Zündschlüssel 380 besitzt und welches mit einem Kfz-System 300 gemäß der vorliegenden Erfindung ausgerüstet ist, kann dann seine Fahreigenschaften abhängig vom jeweiligen Benutzer variieren. So kann der erste Ehepartner beispielsweise die Variierung der Lenkhilfe deaktivieren, während der zweite Ehepartner die Variierung der Lenkhilfe aktiviert hat.

Weiterhin kann die Übertragung der Bewegungsdaten 330 vom Kfz-Zündschlüssel 380 zur Kfz-Steuereinrichtung 350 beispielsweise kabellos (beispielsweise durch induktive Kopplung) oder über Kontakte im Zündschloss des Kfz und am Kfz-Zündschlüssel 380 erfolgen.

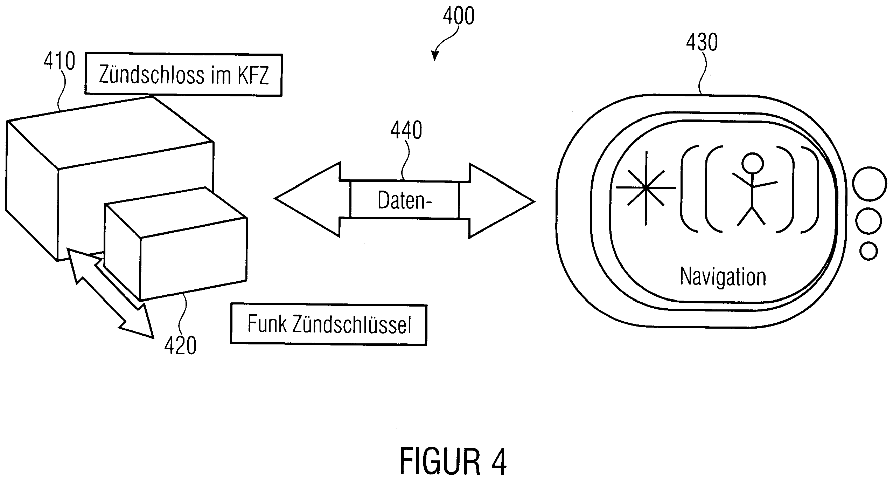

Fig. 4 zeigt eine schematische Darstellung eines Kfz-Systems 400 gemäß einem vierten Ausführungsbeispiel der vorliegenden Erfindung. Das Kfz-System 400 umfasst einen Kfz-Zündschlüssel 420, welcher als ein Funkzündschlüssel ausgeprägt ist. Weiterhin umfasst das Kfz-System 400 eine Kfz-Steuervorrichtung, welche ein Zündschloss 410 sowie eine Kfz-Navigationsvorrichtung 430 umfasst.

Der Kfz-Zündschlüssel 420 kann beispielsweise als ein Kfz-Zündschlüssel 100, wie er im ersten Ausführungsbeispiel der vorliegenden Erfindung beschrieben wurde, ausgeführt sein. Die Kfz-Navigationsvorrichtung 430 kann beispielsweise als eine Kfz-Navigationsvorrichtung 200, wie sie im zweiten Ausführungsbeispiel der vorliegenden Erfindung beschrieben wurde, ausgeführt sein.

Der Kfz-Zündschlüssel 420 erfasst seine Bewegungen und speichert die aus den Bewegungen gewonnen Bewegungsdaten 440 in einem Speicher ab. Die Bewegungsdaten 440 können über eine erste Schnittstelle im Kfz-Zündschlüssel 420 an eine zweite Schnittstelle in der Kfz-Navigationsvorrichtung 430 übertragen werden. Die Kfz-Navigationsvorrichtung 430 kann abhängig von den empfangenen Bewegungsdaten 440 dann eine Fahrtroute berechnen.

Die Kommunikation zwischen dem Kfz-Zündschlüssel 420 bzw. Funkzündschlüssel 420 bzw. "Bewegungssensor-Autoschlüssel" und dem Kfz kann dabei über RFID, Bluetooth, andere Funktechniken im ISM-Band oder drahtgebunden über zusätzliche Kontakte in dem Zündschloss 410 erfolgen. In ähnlicher Weise kann ein Laden des Funkzündschlüssels 420 über das Zündschloss erfolgen.

Eine mögliche Erweiterung des Kfz-Systems 400 besteht in einer Ladeschale bzw. einer Ladevorrichtung bzw. einem Zündschlüsselauslesegerät bzw. einer Zündschlüsselauslesevorrichtung mit Kommunikationsstelle für die Heimanwendung, so dass die Auswertung der Daten nicht nur im Kfz, sondern auch auf einem externen System bzw. Gerät, beispielsweise auf dem heimischen oder einem anderen PC, auf einem PDA, auf einem Laptop, auf einem Fernseher und Ähnlichen erfolgen kann. Die einzelnen Komponenten des Kfz-Systems 400 können ausgebildet sein um anhand der Aktivitätsdaten des Anwenders, im und außerhalb des Autos bzw. Kfz, die zurückgelegte Route zu erfassen, zu speichern, auszuwerten, zu übertragen und anzuzeigen. Hierbei kann der Kfz-Zündschlüssel 420 als Speichermedium dienen.

Wie schon im vorherigen Absatz erwähnt kann der Kfz-Zündschlüssel 420 als Speichermedium verwendet werden, um die personenbezogenen Aktivitäts- und Bewegungsprofildaten, sowie die zurückgelegten Routen (im Kfz und/oder zu Fuß) speichern und vom Kfz in eine Heimanwendung übertragen zu können. So können die Bewegungsdaten 440 zusammen mit Kartenmaterial bzw. der Kfz-Navigationsvorrichtung 430 eine Basis für ein interaktives Fitnesscoaching oder eine Fitnesstrainingsapplikation erstellen. Mit anderen Worten, werden beispielsweise die Aktivitätsdaten und die Route auf dem Kfz-Zündschlüssel 420 gespeichert. Diese Daten können mit Hilfe des Zündschlüsselauslesegerätes, an dem externen Gerät ausgelesen, weiterverarbeitet und dargestellt werden. Auf diese Weise kann dem Anwender ein umfassendes Bild seiner geleisteten Aktivität aufgezeigt werden. Das Kfz-System 400 stellt damit ein portables Feedbacksystem als Aktivitätsbegleiter, mit der Fähigkeit Aktivitätsprofile, Aktivitätstagebücher und Ähnliches aufzeichnen, dar.

Weiterhin ist es möglich, dass der Kfz-Zündschlüssel 420 als generelles Speichermedium nicht nur für zurückgelegte Routen wie beispielsweise Fahrrouten, zu Fuß zurückgelegte Wege und Ähnliches und Aktivitätsdaten, sondern auch für eine Routenplanung genutzt werden kann. Die Routenplanung kann dementsprechend beispielsweise über ein externes Gerät, beispielsweise PC, PDA, Laptop oder Ähnliches erfolgen und auf dem Kfz-Zündschlüssel 420 gespeichert werden. Die auf dem Kfz-Zündschlüssel 420 gespeicherten Daten können automatisch über die erste Schnittstelle im Kfz-Zündschlüssel 420 an die zweite Schnittstelle in der Kfz-Navigationsvorrichtung 430 übertragen werden. Die Einstellung der Route, wichtige Punkte (sogenannten "Points of Interrest"), "Trimm dich Pfade" und Ähnliches in der Kfz-Navigationsvorrichtung 430 erfolgt automatisch, eine manuelle Eingabe des Ziels, bzw. der Zwischenziele, über die Kfz-Navigationsvorrichtung 430 entfällt.

Die Kernkomponente des hier beschriebenen Kfz-Systems 400 ist dabei ein in den Funkzündschlüssel 420 integrierter intelligenter Bewegungssensor und dessen Vernetzung mit der Navigationsvorrichtung 430 des Kfz.

Dieses System kann als ActiCoach: Portables Feedback-System der täglichen Aktivität auf Basis eines Kfz-Zündschlüssels zur Motivation des Fahrers zur Bewegung oder als Verfahren und Vorrichtung zum Monitoring und interaktive Darstellung der Bewegungsaktivitäten des Autofahrers oder als eine Vorrichtung zur Erfassung der Bewegungsaktivitäten, deren Speicherung, Übertragung, Analyse und Vergleich im Sinne eines Fitnesscoaching des Autofahrers bezeichnet werden.

Zusammenfassend lässt sich sagen, da sich das Auto bzw. Kfz längst zum Lifestyleprodukt entwickelt hat, erscheint es sinnvoll, es auch in das persönliche Fitnessprogramm und die Gesundheitsvorsorge zu integrieren. Das Auto erfasst dabei die sportlichen Aktivitäten seiner Benutzer und animiert bei Bewegungsmangel dazu, diese in den Alltag integriert auszugleichen.

Der Schlüssel des Kfz stellt aufgrund seiner Bedeutung für den Betrieb des Kfz und der daraus resultierenden Notwendigkeit, ihn mitzuführen, eine ideale Plattform für die Integration eines intelligenten Sensorsystems dar. Dies gilt in besonderem Maße für ein System zur Erfassung der körperlichen Aktivitäten, d.h. Bewegung, da es erfordert, kontinuierlich am Körper getragen zu werden. Zudem besitzt der Kfz-Zündschlüssel die Möglichkeit, die ermittelten Bewegungsdaten quasi intuitiv über das Zündschloss an das Kfz zu übertragen. Dieses Konzept hat einerseits viele Vorteile in der Gebrauchstauglichkeit und Fahrerakzeptanz, da es nicht mehr notwendig ist, ein gesondertes Messgerät oder Sensorteil zu tragen und man den Kfz-Zündschlüssel nahezu immer bei sich trägt und andererseits bietet es breite Möglichkeiten zur Systemerweiterung und Datenaustausch über Kontakte im Zündschloss oder die Anwendung von Funktechniken.

Ausführungsbeispiele der Verfahren können um alle Aspekte und Funktionalitäten der erfindunsgemäßen Vorrichtungen ergänzt werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfmdungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Kfz-Zündschlüssel mit:
einem Bewegungssensor (110) zum Erfassen einer Bewegung des Kfz-Zündschlüssels (100);
einem Speicher (120) zum Aufzeichnen von den aus der erfassten Bewegung gewonnenen Bewegungsdaten (130); und
einer Schnittstelle (140) zum Ausgeben der Bewegungsdaten (130) an ein externes Gerät (150);
der ferner eine Auswerteeinrichtung (180) umfasst;
wobei die Auswerteeinrichtung (180) ausgebildet ist, um aus von dem Bewegungssensor (110) gelieferten Rohdaten (134) klassifizierte Aktivitätsinformationen (132) als die Bewegungsdaten (130) zu erzeugen; und
wobei der Kfz-Zündschlüssel (100) ausgebildet ist, um verschiedene Bewegungsklassen aus einer Gruppe von Bewegungsklassen zu erkennen, die Ruhen, Gehen. Laufen, Treppe Hoch und Runter steigen und/oder Radfahren aufweist.

2. Kfz-Zündschlüssel gemäß Anspruch 1,
bei dem der Bewegungssensor (110) einen 3D-Beschleunigungssensor (170) umfasst; oder
bei dem der Bewegungssensor (110) einen 3D-Beschleunigungssensor (170) und einen Drucksensor (160) zur Höhenerfassung umfasst.

3. Kfz-Zündschlüssel gemäß einem der Ansprüche 1 bis 2 ,
der ferner eine Vorrichtung zur Anzeige (190) einer Repräsentation der Bewegungsdaten (130) einem Benutzer gegenüber aufweist.

4. Verfahren mit den Schritten:
a) Erfassen der Bewegung eines Kfz-Zündschlüssels (100) durch einen Bewegungssensor (110) im Kfz-Zündschlüssel (100);
b) Erzeugen von klassifizierten Aktivitätsinformationen (132) aus von dem Bewegungssensor (110) gelieferten Rohdaten (134) als Bewegungsdaten (130);
c) Erkennen von verschiedenen Bewegungsklassen aus einer Gruppe von Bewegungsklassen, die Ruhen, Gehen. Laufen, Treppe Hoch und Runter steigen und/oder Radfahren aufweist;
d) Aufzeichnen der aus der erfassten Bewegung gewonnenen Bewegungsdaten (130) in einen Speicher des Kfz-Zündschlüssels (120); und
e) Ausgabe der Bewegungsdaten (130) an ein externes Gerät (150).

5. Kfz-System mit:
einem Kfz-Zündschlüssel (380; 420) mit einem Bewegungssensor (310) zum Erfassen einer Bewegung des Kfz-Zündschlüssels (380; 420), wobei der Kfz-Zündschlüssel (380; 420) einen Speicher (320) zum Aufzeichnen von den aus der erfassten Bewegung gewonnenen Bewegungsdaten (330; 440) und eine erste Schnittstelle (340) zum Ausgeben der Bewegungsdaten (330; 440) an eine Kfz-Steuereinrichtung (350) umfasst; und
einer Kfz-Steuereinrichtung (350), die dem Kfz-Zündschlüssel (380; 420) zugeordnet ist, umfassend eine zweite Schnittstelle (360) zum Empfang der Bewegungsdaten (330; 440) und zum Durchführen von Kfz-Steuerungsaufgaben (370).

6. Kfz-System gemäß Anspruch 5,
bei dem die Kfz-Steuereinrichtung (350) ausgebildet ist, um abhängig von den empfangenen Bewegungsdaten (330; 440) eine Stärke der Lenkhilfe zu variieren; und/oder eine Startfunktion des Autos zu deaktivieren.

7. Kfz-System gemäß einem der Ansprüche 5 oder 6,
das ferner eine Ladevorrichtung umfasst und bei dem der Kfz-Zündschlüssel (380; 410) einen wieder aufladbaren Energiespeicher umfasst, wobei die Ladevorrichtung ausgeprägt ist, um den Energiespeicher des Kfz-Zündschlüssels (380; 410) zu laden.

8. Kfz-System gemäß einem der Ansprüche 5 bis 7,
das ferner eine Zündschlüsselauslesevorrichtung umfasst,
wobei die Zündschlüsselauslesevorrichtung ausgebildet ist, um die Bewegungsdaten (330; 440) von dem Kfz-Zündschlüssel (380; 410) an ein externes Gerät zu übertragen.

9. Kfz-System gemäß einem der Ansprüche 5 bis 8
mit einer Mehrzahl von Kfz-Zündschlüsseln (380; 410),wobei jedem Kfz-Zündschlüssel (380; 410) aus der Mehrzahl von Kfz-Zündschlüsseln (380; 410) eindeutig ein Index zugeordnet ist; und
bei dem die Kfz-Steuereinrichtung (350) ausgeprägt ist, um Kfz-Steuerungsaufgaben (370) unter Berücksichtigung der Bewegungsdaten (330; 440) und dem Index durchzuführen.

10. Verfahren mit den folgenden Schritten:
a) Erfassen der Bewegung eines Kfz-Zündschlüssels (380; 410) mit einem Bewegungssensor (310) im Kfz-Zündschlüssel (380; 410);
b) Aufzeichnen der aus der Bewegung gewonnenen Bewegungsdaten (330; 440);
c) Ausgeben der Bewegungsdaten (330; 440) von dem Kfz-Zündschlüssel (380; 410) und Empfangen der Bewegungsdaten (330; 440) durch eine Kfz-Steuereinrichtung (350);
d) Durchführen von Kfz-Steuerungsaufgaben (370) unter Berücksichtigung der Bewegungsdaten (330).

11. Computerprogramm zum Ausführen eines Verfahrens gemäß Anspruch 4, oder 10 wenn das Computerprogramm auf einem Prozessor ausgeführt wird.

## Claims

1. Motor vehicle ignition key comprising:
a movement sensor (110) for detecting a movement of the motor vehicle ignition key (100);
a memory (120) for recording the movement data (130) obtained from the detected movement; and
an interface (140) for outputting the movement data (130) to an external unit (150);
which further comprises an evaluation means (180);
the evaluation means (180) being configured to generate, from the raw data (134) provided by the movement sensor (110), classified activity information (132) as the movement data (130); and
the motor vehicle ignition key (100) being configured to recognize different categories of movement from a group of categories of movement which comprises resting, walking, running, walking up and down a staircase and/or riding a bicycle.

2. Motor vehicle ignition key as claimed in claim 1,
wherein the movement sensor (110) comprises a 3D acceleration sensor (170); or wherein the movement sensor (110) comprises a 3D acceleration sensor (170) and a pressure sensor (160) for altitude detection.

3. Motor vehicle ignition key as claimed in any of claims 1 to 2,
further comprising a device for displaying (190) a presentation of the movement data (130) to a user.

4. Method comprising:
a) detecting the movement of a motor vehicle ignition key (100) by a movement sensor (110) within the motor vehicle ignition key (100);
b) generating, from the raw data (134) provided by the movement sensor (110), classified activity information (132) as movement data (130).
c) recognizing different categories of movement from a group of categories of movement which comprises resting, walking, running, walking up and down a staircase and/or riding a bicycle;
d) recording the movement data (130) obtained from the detected movement into a memory of the motor vehicle ignition key (120); and
c) outputting the movement data (130) to an external unit (150).

5. Motor vehicle system comprising:
a motor vehicle ignition key (380; 420) comprising a movement sensor (310) for detecting a movement of the motor vehicle ignition key (380; 420), the motor vehicle ignition key (380; 420) comprising a memory (320) for recording the movement data (330; 440) obtained from the detected movement, and a first interface (340) for outputting the movement data (330; 440) to a motor vehicle controller (350); and
a motor vehicle controller (350) associated with the motor vehicle ignition key (380; 420), comprising a second interface (360) for receiving the movement data (330; 440) and for performing motor vehicle control tasks (370).

6. Motor vehicle system as claimed in claim 5,
wherein the motor vehicle controller (350) is configured to vary a strength of the power steering in dependence on the movement data (330; 440) received; and/or to deactivate a start-up function of the car.

7. Motor vehicle system as claimed in any of claims 5 or 6,
further comprising a charging device, and wherein the motor vehicle ignition key (380; 410) comprises a rechargeable energy store, the charging device being adapted to charge the energy store of the motor vehicle ignition key (380; 410).

8. Motor vehicle system as claimed in any of claims 5 to 7,
further comprising an ignition key readout device,
the ignition key readout device being configured to transmit the movement data (330; 440) from the motor vehicle ignition key (380; 410) to an external unit.

9. Motor vehicle system as claimed in any of claims 5 to 8,
comprising a plurality of motor vehicle ignition keys (380; 410), each motor vehicle ignition key (380; 410) having unambiguously associated therewith an index from the plurality of motor vehicle ignition keys (380; 410); and
wherein the motor vehicle controller (350) is adapted to perform motor vehicle control tasks (370) while taking into account the movement data (330; 440) and the index.

10. Method comprising:
a) detecting the movement of a motor vehicle ignition key (380; 410) using a movement sensor (310) within the motor vehicle ignition key (380; 410);
b) recording the movement data (330; 440) obtained from the movement;
c) outputting the movement data (330; 440) from the motor vehicle ignition key (380; 410), and reception of the movement data (330; 440) on the part of a motor vehicle controller (350);
d) performing motor vehicle control tasks (370) while taking into account the movement data (330).

11. Computer program for performing a method as claimed in any of claims 4 or 10 when the computer program is executed on a processor.

## Revendications

1. Clé de contact de véhicule automobile avec:
un capteur de mouvement (110) destiné à détecter un mouvement de la clé de contact de véhicule automobile (100);
une mémoire (120) destinée à enregistrer les données de mouvement obtenues à partir du mouvement détecté (130); et
une interface (140) destinée à sortir les données de mouvement (130) vers un appareil externe (150);
comportant par ailleurs un moyen d'évaluation (180);
dans laquelle le moyen d'évaluation (180) est configuré pour générer, à partir des données brutes (134) fournies par le capteur de mouvement (110), des informations d'activité classifiées (132) comme données de mouvement (130); et
dans laquelle la clé de contact de véhicule automobile (100) est réalisée pour reconnaître différentes classes de mouvement parmi un groupe de classes de mouvement qui présente repos, marche, courir, monter et descendre des escaliers et/ou rouler à vélo.

2. Clé de contact de véhicule automobile selon la revendication 1,
dans laquelle le capteur de mouvement (110) comporte un capteur d'accélération 3D (170); ou
dans laquelle le capteur de mouvement (110) comporte un capteur d'accélération 3D (170) et un capteur de pression (160) permettant de détecter la hauteur.

3. Clé de contact de véhicule automobile selon l'une des revendications 1 à 2,
présentant par ailleurs un dispositif destiné à afficher (190) pour un utilisateur une représentation des données de mouvement (130).

4. Procédé aux étapes consistant à:
a) détecter le mouvement d'une clé de contact du véhicule automobile (100) par un capteur de mouvement (110) dans la clé de contact de véhicule automobile (100);
b) générer des informations d'activité classifiées (132) à partir de données brutes (134) fournies par le capteur de mouvement (110) comme données de mouvement (130);
c) reconnaître différentes classes de mouvement parmi un groupe de classes de mouvement qui présente repos, marche, courir, monter et descendre des escaliers et/ou rouler à vélo;
d) enregistrer les données de mouvement (130) obtenues à partir du mouvement détecté dans une mémoire de la clé de contact de véhicule automobile (120); et
e) sortir les données de mouvement (130) vers un appareil externe (150).

5. Système de véhicule automobile avec:
une clé de contact de véhicule automobile (380; 420) avec un capteur de mouvement (310) destiné à détecter un mouvement de la clé de contact de véhicule automobile (380; 420), la clé de contact de véhicule automobile (380; 420) comportant une mémoire (320) destinée à enregistrer les données de mouvement (330; 440) obtenues à partir du mouvement détecté et une première interface (340) destinée à sortir les données de mouvement (330; 440) vers un moyen de commande de véhicule automobile (350); et
un moyen de commande de véhicule automobile (350) qui est associé à la clé de contact de véhicule automobile (380; 420), comportant une deuxième interface (360) destinée à recevoir les données de mouvement (330; 440) et à réaliser des tâches de commande de véhicule automobile (370).

6. Système de véhicule automobile selon la revendication 5,
dans lequel le moyen de commande de véhicule automobile (350) est réalisé pour faire varier, en fonction des données de mouvement reçues (330; 440), une épaisseur de l'assistance de direction; et/ou pour désactiver une fonction de démarrage de la voiture.

7. Système de véhicule automobile selon l'une des revendications 5 ou 6,
comportant par ailleurs un dispositif de chargement et dans lequel la clé de contact de véhicule automobile (380; 410) comporte un accumulateur d'énergie rechargeable, le moyen de chargement étant marqué pour charger l'accumulateur d'énergie de la clé de contact de véhicule automobile (380; 410).

8. Système de véhicule automobile selon l'une des revendications 5 à 7,
comportant par ailleurs un moyen de lecture de clé de contact, dans lequel le moyen de lecture de clé de contact est réalisé pour transmettre les données de mouvement (330; 440) de la clé de contact de véhicule moyen de lecture de (380; 410) à un appareil externe.

9. Système de véhicule automobile selon l'une des revendications 5 à 8,
avec une pluralité de clés de contact de véhicule automobile (380; 410), à chaque clé de contact de véhicule automobile (380; 410) parmi la pluralité de clés de contact de véhicule automobile (380; 410) étant associé de manière univoque un indice; et
dans lequel le moyen de commande de véhicule automobile (350) est marqué pour réaliser des tâches de commande de véhicule automobile (370) en tenant compte des données de mouvement (330; 440) et de l'indice.

10. Procédé aux étapes suivantes consistant à:
a) détecter le mouvement d'une clé de contact de véhicule automobile (380; 410) avec un capteur de mouvement (310) dans la clé de contact de véhicule automobile (380; 410);
b) enregistrer les données de mouvement (330; 440) obtenues à partir du mouvement;
c) sortir les données de mouvement (330; 440) de la clé de contact de véhicule automobile (380; 410) et recevoir les données de mouvement (330; 440) par un moyen de commande de véhicule automobile (350);
d) réaliser des tâches de commande de véhicule automobile (370) en tenant compte des données de mouvement (330).

11. Programme d'ordinateur pour réaliser un procédé selon la revendication 4 ou 10 lorsque le programme d'ordinateur est exécuté sur un processeur.
